# EUROPEAN PATENT SPECIFICATION

(11) **EP 2 944 782 B1**
(45) Date of publication and mention of the grant of the patent: **12.04.2017**
(21) Application number: 15167633.5
(22) Date of filing: 13.05.2015
(51) Int. Cl.: F01N 9/00, F01N 3/021, F01N 3/025, F01N 3/10, F02B 39/16, F02B 37/12

(54) **CONTROL SYSTEM FOR AN INTERNAL COMBUSTION ENGINE**
STEUERUNGSSYSTEM FÜR EINE BRENNKRAFTMASCHINE
SYSTÈME DE CONTRÔLE POUR UN MOTEUR À COMBUSTION INTERNE

(30) Priority: 14.05.2014 JP 2014100971
(43) Date of publication of application: 18.11.2015
(73) Proprietor: Toyota Jidosha Kabushiki Kaisha, Toyota-shi, Aichi-ken 471-8571 (JP)
(72) Inventor: NAKAGAWA, Masayoshi, TOYOTA-SHI, AICHI-KEN, 471-8571 (JP)
(74) Representative: Intès, Didier Gérard André

(56) References cited:
- DE-A1-102011 084 849
- DE-T5-112012 000 088
- US-A1- 2011 239 623
- US-A1- 2013 227 945

## Description

### [Technical Field]

The present invention relates to a control system for an internal combustion engine equipped with a supercharger having a turbine and compressor.

### [Background Art]

There are internal combustion engines equipped with a supercharger for supercharging intake air utilizing the energy of exhaust gas. The supercharger has a turbine provided in the exhaust passage and a compressor provided in the intake passage.

PTL 1 and PTL 2 disclose an internal combustion engine equipped with such a supercharger and what is called a nozzle vane capable of varying the nozzle area at the exhaust gas inlet of the turbine. The supercharger provided with the nozzle vane is capable of controlling the supercharging pressure by adjusting the degree of opening of the nozzle vane.

In the system disclosed in PTL 1, the degree of opening of the nozzle vane (stationary blade rotation means) is controlled to make the quantity of intake air supplied to the internal combustion engine equal to or larger than a surge minimum air quantity that can prevent surging (a phenomenon causing uneven rotation of the compressor).

In the system disclosed in PTL 2, when the degree of opening of the throttle valve is equal to or lower than a predetermined value, the degree of opening of the nozzle vane is controlled in such a way as to make the absolute pressure at a location between the outlet of the compressor of the supercharger and the throttle valve equal to a target value. On the other hand, when the degree of opening of the throttle valve is larger than the predetermined value, the degree of opening of the nozzle vane is controlled in such a way as to make the relative pressure at a location downstream of the throttle valve equal to a target value.

PTL 3 discloses a technology employed in an internal combustion engine equipped with a supercharger as described above and an EGR apparatus, in which the degree of opening of the EGR valve is controlled in relation to the atmospheric pressure, thereby keeping the rotation speed of the turbine within an allowable range.

Document DE 10 2011 084 849A discloses a control system for an internal combustion engine equipped with a supercharger, comprising a filter provided in the exhaust passage to trap particulate matter (PM) in exhaust gas, and a regeneration execution unit to execute filter regeneration control.

### [Citation List]

### [Patent Literature]

[PTL 1]
   Japanese Patent Application Laid-Open No. 2007-071092
[PTL 2]
   Japanese Patent Application Laid-Open No. 2005-083322
[PTL 3]
   Japanese Patent Application Laid-Open No. 2008-184922

### [Summary of Invention]

### [Technical Problem]

When a vehicle equipped with an internal combustion engine travels at high altitudes, the atmospheric pressure around the vehicle is low. In the case of an internal combustion engine equipped with a supercharger having a turbine and compressor, low atmospheric pressure around the vehicle leads to low exhaust gas pressure downstream of the turbine. Consequently, the turbine expansion ratio ("the pressure at the exhaust gas inlet of the turbine"/"the pressure at the exhaust gas outlet of the turbine") becomes high.

Excessively high turbine expansion ratios can lead to over speed of the supercharger and/or breakage of a component(s) (e.g. back plate and impeller) of the turbine. In the case of a supercharger with a turbine provided with a nozzle vane as means for solving the above-described problem, the degree of opening of the nozzle vane may be increased in response to a decrease in the atmospheric pressure. Increasing the degree of opening of the nozzle vane leads to a decrease in the pressure at the exhaust gas inlet of the turbine. Consequently, excessive increase in the turbine expansion ratio can be prevented.

However, increasing the degree of opening of the nozzle vane leads to a decrease in the supercharging pressure. In consequence, there is a possibility that the responsiveness in increasing the engine load during the accelerating operation may be deteriorated. Furthermore, in the case of an internal combustion engine equipped with an EGR apparatus, if the quantity of EGR gas is increased in order to reduce NOx emissions in a state in which sufficient supercharging pressure is not cannot be attained, there is a possibility that PM (particulate matter) emissions may increase due to insufficiency of the intake air quantity.

The present invention has been made in view of the above-described problems, and its object is to prevent, in an internal combustion engine equipped with a supercharger, excessive increase in the turbine expansion ratio resulting from a decrease in the atmospheric pressure while reducing the decrease in the supercharging pressure.

### [Solution to Problem]

In the present invention, the amount of particulate matter (PM) deposited in a filter at which the execution of filter regeneration control is terminated is varied in relation to the atmospheric pressure around the vehicle.

More specifically, a control system for an internal combustion engine according to the present invention is a control system as defined by claim 1. This control system is a control system for an internal combustion engine equipped with a supercharger that has a turbine provided in an exhaust passage and a compressor provided in an intake passage to supercharge intake air utilizing the energy of exhaust gas, comprising:
a filter provided in the exhaust passage downstream of said turbine to trap particulate matter in exhaust gas; and
a regeneration execution unit that is configured to execute filter regeneration control for removing particulate matter deposited in said filter by oxidizing it,
wherein the amount of particulate matter deposited in said filter at which said regeneration execution unit terminates the execution of the filter regeneration control after starting the execution of the filter regeneration control is larger when the atmospheric pressure around a vehicle equipped with the internal combustion engine is low than when it is high.

The larger the amount of PM deposited in the filter (PM deposition amount) is, the higher the exhaust gas pressure upstream of the filter is. As the filter regeneration control is executed, the PM deposited in the filter is removed, so that the exhaust gas pressure upstream of the filter decreases.

With the control system according to the present invention, the PM deposition amount in the filter at the time when the execution of the filter regeneration control is terminated is larger when the atmospheric pressure around the vehicle equipped with the internal combustion engine is low than when the atmospheric pressure is high. Consequently, the decrease in the exhaust gas pressure upstream of the filter caused by the execution of the filter regeneration control is smaller when the atmospheric pressure around the vehicle is low than when the atmospheric pressure is high. Thus, when the atmospheric pressure is low, the decrease in the exhaust gas pressure upstream of the filter or the decrease in the pressure at the exhaust gas outlet of the turbine can be made smaller.

By reducing the decrease in the pressure at the exhaust gas outlet of the turbine, the increase in the turbine expansion ratio can be made smaller without decreasing the pressure at the exhaust gas inlet of the turbine (or with a smaller decrease in the pressure at the exhaust gas inlet of the turbine). In this case, the decrease in the supercharging pressure can be made smaller than in the case where the increase in the turbine expansion ratio is reduced by decreasing the supercharging efficiency so that the degree of opening of the nozzle vane of the turbine is increased responsive to a decrease in the atmospheric pressure. Thus, with the control system according to the present invention, it is possible to prevent excessive increase in the turbine expansion ratio resulting from an decrease in the atmospheric pressure while keeping the decrease in the supercharging pressure small.

In the control system according to the present invention, the length of the period during which the filter regeneration control is performed may be made shorter when the atmospheric pressure is low than when the atmospheric pressure is high. Alternatively, a value of the PM deposition amount in the filter that serves as a threshold for terminating the execution of the filter regeneration control may be set larger when the atmospheric pressure is low than when the atmospheric pressure is high. With these methods, when the atmospheric pressure is low, the execution of the filter regeneration control can be terminated at a time when the amount of PM deposited in the filter is larger than the amount at which the execution of the filter regeneration control is terminated when the atmospheric pressure around the vehicle is high.

In the control system according to the present invention, the lower the atmospheric pressure around the vehicle is, the smaller the amount of PM removed from the filter by executing the filter regeneration control is made. With this method, the lower the atmospheric pressure is, the larger the PM deposition amount in the filter at the time of termination of the execution of the filter regeneration control is. In consequence, excessive increase in the turbine expansion ratio resulting from a decrease in the atmospheric pressure can be prevented more reliably.

In the control system according to the present invention, after the start of the execution of the filter regeneration control, the regeneration execution unit is configured to terminate the execution of the filter regeneration control at the time when the PM deposition amount in the filter becomes equal to or smaller than a regeneration termination amount determined in relation to the atmospheric pressure around the vehicle. In this case, the regeneration termination amount is set larger when the atmospheric pressure around the vehicle is low than when the atmospheric pressure is high, as described above. Moreover, when the PM deposition amount in the filter is smaller than the regeneration termination amount while the filter regeneration control is not being executed by the regeneration execution unit, emitted PM increasing control for increasing the quantity of PM emitted from the internal combustion engine may be executed.

As the emitted PM increasing control is executed, the PM deposition amount in the filter increases quickly. Consequently, with this control, when the PM deposition amount in the filter is smaller than the regeneration termination amount, the exhaust gas pressure upstream of the filter or the pressure at the exhaust gas outlet of the turbine can be increased more quickly. Therefore, it is possible to shorten the length of the period during which the turbine expansion ratio tends to become high due to low pressure at the exhaust gas outlet of the turbine.

The internal combustion engine to which the present invention is applied may be equipped with an EGR apparatus that introduces a portion of the exhaust gas flowing in the exhaust passage into the air-intake system as EGR gas. The present invention enables a reduction of the decrease in the supercharging pressure even when the atmospheric pressure is low. Therefore, it is possible to increase the quantity of EGR gas with a sufficient intake air quantity being kept. Therefore, a reduction of NOx emissions and a reduction of PM emissions can both be achieved.

The supercharger used with the control system according to the present invention may have a nozzle vane adapted to be capable of varying the nozzle area at the exhaust gas inlet of the turbine. According to the present invention, when the atmospheric pressure becomes low, the increase in the turbine expansion ratio is made small by reducing the decrease in the pressure at the exhaust gas outlet of the turbine. Therefore, even when the atmospheric pressure becomes low, the increase in the degree of opening of the nozzle vane that is made in order to reduce the increase in the turbine expansion ratio can be made smaller. In consequence, it is possible to make the decrease in the supercharging pressure smaller.

### [Advantageous Effects of Invention]

The control system according to the present invention can prevent, in an internal combustion engine equipped with a supercharger, excessive increase in the turbine expansion ratio resulting from a decrease in the atmospheric pressure while reducing the decrease in the supercharging pressure.

### [Brief Description of Drawings]

Fig. 1 is a diagram showing the general configuration of an internal combustion engine according to an embodiment and its air-intake and exhaust systems.
Fig. 2 is a flow chart of the process of filter regeneration control according to a first embodiment.
Fig. 3 is a graph showing relationship between the atmospheric pressure Pa and the regeneration termination amount Qpme according to the first embodiment.
Fig. 4 is a time chart showing the changes with time of the amount of PM deposited in the filter (PM deposition amount), the pressure at the exhaust gas outlet of the turbine (turbine outlet pressure), the degree of opening of the nozzle vane (VN opening degree), the turbine expansion ratio, the supercharging pressure, and the amount of NOx emissions from the internal combustion engine (NOx emission amount), in a case where the atmospheric pressure around the vehicle is low.
Fig. 5 is a graph showing relationship between the PM deposition amount in the filter and the PM oxidation rate during the execution of the filter regeneration control.
Fig. 6 is a flow chart of the process of combustion control according to a second embodiment.

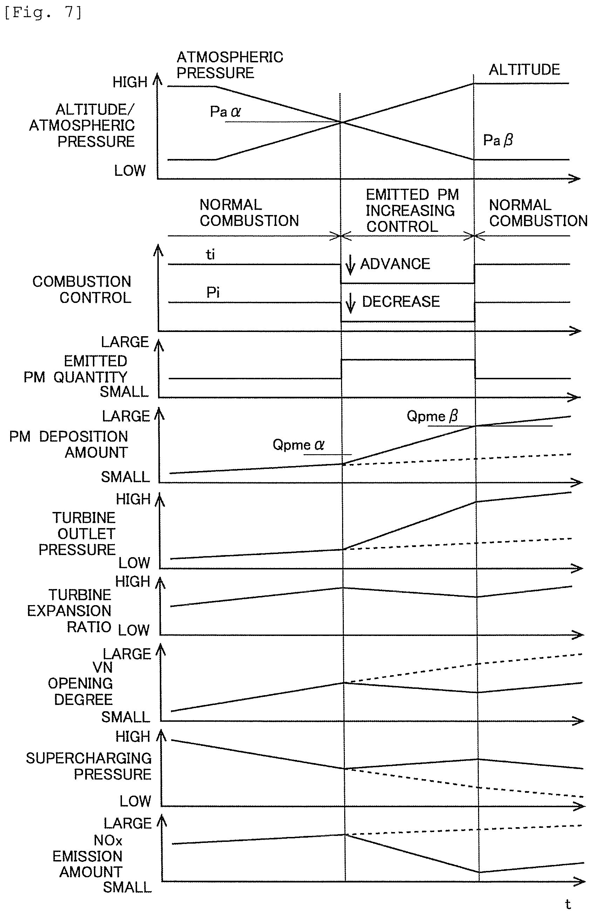

Fig. 7 is a time chart showing the changes with time of the altitude and the atmospheric pressure around the vehicle, the status of combustion control (in terms of the fuel injection timing ti and the fuel injection pressure Pi), the quantity of PM emitted from the internal combustion engine (emitted PM quantity), the amount of PM deposited in the filter (PM deposition amount), the pressure at the exhaust gas outlet of the turbine (turbine outlet pressure), the turbine expansion ratio, the degree of opening of the nozzle vane (VN opening degree), the supercharging pressure, and the amount of NOx emissions from the internal combustion engine (NOx emission amount), in a case where the vehicle equipped with the internal combustion engine is climbing.

### [Description of Embodiment]

In the following, specific embodiments of the present invention will be described with reference to the drawings. The dimensions, materials, shapes, relative arrangements, and other features of the components that will be described in connection with the embodiments are not intended to limit the technical scope of the present invention only to them, unless particularly stated.

### <First Embodiment>

### <General Configuration of Internal Combustion Engine and Its Air-Intake and Exhaust Systems>

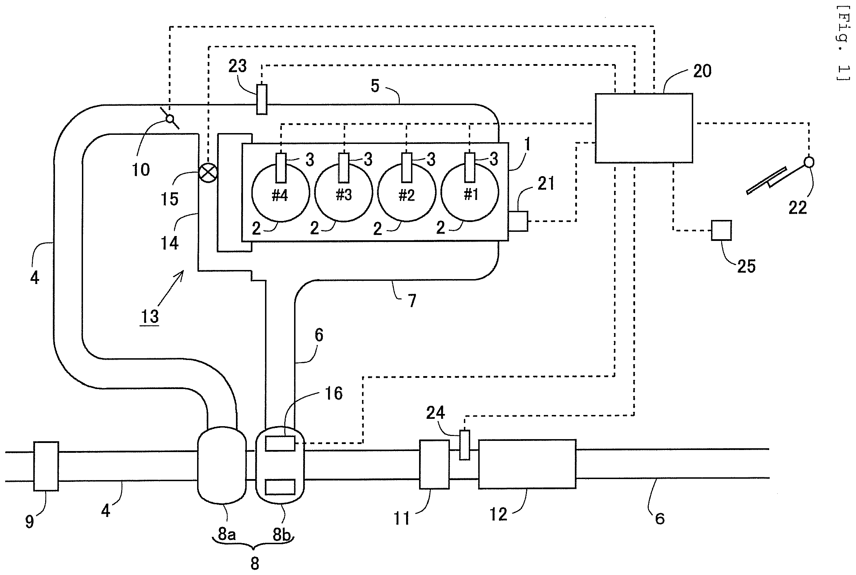

Fig. 1 is a diagram showing the general configuration of an internal combustion engine and its air-intake and exhaust systems according to the first embodiment. The internal combustion engine 1 is a diesel engine having four cylinders 2 for driving a vehicle. Each cylinder 2 is provided with a fuel injection valve 3, which injects fuel directly into the cylinder 2.

The internal combustion engine 1 is connected with an intake manifold 5 and an exhaust manifold 7. An intake passage 4 is connected to the intake manifold 5. An exhaust pipe 6 is connected to the exhaust manifold 7. In this embodiment, the intake manifold 5 and the intake passage 4 constitute the intake passage according to the present invention, and the exhaust manifold 7 and the exhaust passage 6 constitute the exhaust passage according to the present invention.

A compressor 8a of a turbocharger 8 is provided in the intake passage 4. A turbine 8b of the turbocharger 8 is provided in the exhaust passage 6. The turbine 8b is equipped with a nozzle vane 16, which is adapted to be capable of varying the nozzle area at the exhaust gas inlet. Hence, the turbocharger 8 is a variable geometry turbocharger that can adjust the supercharging efficiency by varying the degree of opening of the nozzle vane 16.

An air flow meter 9 is provided in the intake passage 4 upstream of the compressor 8a. The air flow meter 9 measures the intake air quantity of the internal combustion engine 1. A throttle valve 10 is provided in the intake passage 4 downstream of the compressor 8a. The throttle valve 10 is adapted to be capable of controlling the intake air quantity of the internal combustion engine 1 by varying the cross sectional area of the air flow channel. An intake air pressure sensor 23 is provided in the intake manifold 5. The intake air pressure sensor 23 measures the intake air pressure in the intake manifold 5.

In the exhaust passage 6 downstream of the turbine 8b, there are an oxidation catalyst 11 and a particulate filter (which will be simply referred to as the filter hereinafter) 12 arranged in order from upstream of the exhaust gas flow. The filter 12 traps PM (particulate matter) in the exhaust gas. Instead of or in addition to the oxidation catalyst 11, a catalyst having an oxidizing function may be supported on the filter 12. A temperature sensor 24 is provided in the exhaust passage 6 between the oxidation catalyst 11 and the filter 12. The temperature sensor 24 measures the temperature of the exhaust gas flowing into the filter 12.

The air-intake and exhaust systems of the internal combustion engine 1 is provided with an EGR apparatus 13. The EGR apparatus 13 includes an EGR passage 14 and an EGR valve 15. One end of the EGR passage 14 is connected to the exhaust manifold 7, and the other end of the EGR passage 14 is connected to the intake passage 4 at a location downstream of the throttle valve 10. The EGR valve 15 is provided in the EGR passage 14 to control the flow rate of the exhaust gas introduced to the intake passage 4 from the exhaust manifold 7 through the EGR passage 14. Alternatively, an EGR passage having one end connected to the exhaust passage 6 at a location downstream of the filter 12 and the other end connected to the intake passage 4 at a location upstream of the compressor 8a may be employed.

The internal combustion engine 1 having the above-described configuration is equipped with an electronic control unit (ECU) 20. The ECU 20 is electrically connected with the air flow meter 9, the intake air pressure sensor 23, the temperature sensor 24, an atmospheric pressure sensor 25, a crank position sensor 21, and an accelerator position sensor 22. The atmospheric pressure sensor 25 measures the atmospheric pressure around the vehicle equipped with the internal combustion engine 1. The crank position sensor 21 senses the rotational position of the output shaft (or crankshaft) of the internal combustion engine 1. The accelerator position sensor 22 senses the accelerator position of the vehicle equipped with the internal combustion engine 1. Signals output from these sensors are input to the ECU 20.

The ECU 20 is also electrically connected with the fuel injection valve 3, the throttle valve 10, the nozzle vane 16, and the EGR valve 15, which are controlled by the ECU 20.

### <Filter Regeneration Control>

Particulate matter (PM) in the exhaust gas trapped by the filter 12 are gradually deposited in it. In this embodiment, filter regeneration control is performed in order to remove the PM deposited in the filter 12. The filter regeneration control according to this embodiment is implemented in the internal combustion engine 1 by performing auxiliary fuel injection (post injection) through the fuel injection valve 3 at appropriate timing after the main fuel injection so that the fuel injected by the auxiliary fuel injection is discharged from the cylinder 2 in unburned state. With post injection, the fuel discharged from the cylinder 2 in unburned state is supplied to the oxidation catalyst 11. The fuel is oxidized in the oxidation catalyst 11 to generate oxidation heat. Exhaust gas flowing into the filter 12 is heated by the oxidation heat. Consequently, the temperature of the filter 12 rises to a temperature that enables oxidation of PM, so that the PM deposited in the filter 12 is oxidized and removed.

In the filter regeneration control in this embodiment, the quantity of fuel injected by post injection is adjusted based on the temperature of the exhaust gas measured by the temperature sensor 24. By adjusting the quantity of fuel injected by post injection, the temperature of the filter 12 is raised to a specific regeneration temperature at which PM can be oxidized.

In this embodiment, the ECU 20 controlling the fuel injection valve 3 to perform filter regeneration control constitutes the regeneration execution unit according to the present invention. The filter regeneration control may be carried out by other methods. For example, a fuel injection valve that adds fuel to the exhaust gas may be provided in the exhaust passage 6 upstream of the oxidation catalyst 11, and fuel may be supplied to the oxidation catalyst 11 by fuel addition through the fuel addition valve instead of post injection. Alternatively, the temperature of the filter 12 may be raised to the regeneration temperature by heating the filter 12 by an electric heater.

In this embodiment, the quantity of PM flowing into the filter 12 (which will be hereinafter referred to as the "inflowing PM quantity") is estimated based on the operation state of the internal combustion engine 1. Moreover, the PM deposition amount in the filter 12 at the present time (i.e. the PM deposition amount at the time when the filter regeneration control is not being performed) is calculated by adding the inflowing PM quantity to the PM deposition amount at the time when the execution of the filter regeneration control was terminated last time. When the PM deposition amount in the filter 12 thus calculated reaches or exceeds a predetermined regeneration start amount, the execution of the filter regeneration control is started. In cases where a differential pressure sensor that measures a differential pressure of the exhaust gas across the filter 12 and/or a PM sensor that measures PM flowing into the filter 12 is provided in the exhaust passage 6, the PM deposition amount in the filter 12 may be calculated based on a value (s) output by such a sensor(s).

After the execution of the filter regeneration control is started, the temperature of the filter 12 reaches the specific regeneration temperature eventually. Then, the PM deposited in the filter 12 is oxidized and removed gradually. In this embodiment, the quantity of PM oxidized in the filter 12 per unit time during the execution of the filter regeneration control is estimated based on the flow rate of the exhaust gas (the output value of the air flow meter 9) and the temperature of the exhaust gas flowing into the filter 12 (the output value of the temperature sensor 24). The PM deposition amount in the filter 12 during the execution of the filter regeneration control is calculated by repeatedly subtracting the thus estimated quantity of PM oxidized in the filter 12 per unit time from the PM deposition amount in the filter 12 at the time of the start of the execution of the filter regeneration control. When the PM deposition amount in the filter 12 decreases to reach or become lower than a predetermined regeneration termination amount, the execution of the filter regeneration control is terminated.

### <Regeneration Termination Amount>

The regeneration termination amount is a value of the PM deposition amount in the filter 12 that serves as a threshold for terminating the filter regeneration control. In this embodiment, the regeneration termination amount is varied in relation to the atmospheric pressure around the vehicle equipped with the internal combustion engine 1. More specifically, the regeneration termination amount is set to be larger when the atmospheric pressure around the vehicle is low than when the atmospheric pressure is high. The reason for this will be described in the following.

When the vehicle equipped with the internal combustion engine 1 is travelling at high altitudes, the atmospheric pressure around the vehicle is low. When the atmospheric pressure around the vehicle is low, the exhaust gas pressure downstream of the turbine 8b is low. Then, the turbine expansion ratio tends to be high due to low pressure at the exhaust gas outlet of the turbine 8b. Excessively high turbine expansion ratios can lead to over speed of the supercharger 8 and/or breakage of a component(s) of the turbine 8b.

To avoid such troubles, in conventional arts, the degree of opening of the nozzle vane of the turbine is increased in response to a decrease in the atmospheric pressure. Increasing the degree of opening of the nozzle vane leads to a decrease in the pressure at the exhaust gas inlet of the turbine. Consequently, increase in the turbine expansion ratio can be prevented or reduced.

However, increasing the degree of opening of the nozzle vane leads to a decrease in the supercharging efficiency of the turbocharger 8, and hence a decrease in the supercharging pressure. Consequently, there is a possibility that the responsiveness in increasing the engine load during accelerating operation may be deteriorated. Furthermore, if the quantity of EGR gas is increased to reduce the amount of NOx emissions in a state in which sufficient supercharging pressure cannot be attained, the intake air quantity may decrease with the increase in the quantity of EGR gas. In consequence, there is a possibility that the amount of PM emissions may increase due to insufficiency in the quantity of air supplied for combustion in the internal combustion engine.

In this embodiment, the pressure upstream of the filter 12 or the pressure at the exhaust gas outlet of the turbine 8b is controlled by adjusting the regeneration termination amount, or the PM deposition amount in the filter 12 at the time of terminating the execution of the filter regeneration control, in relation to the atmospheric pressure. By this control, an excessive increase in the turbine expansion ratio with a decrease in the atmospheric pressure is prevented from occurring.

As the PM deposited in the filter 12 is removed by the execution of the filter regeneration control, the exhaust gas pressure upstream of the filter 12 decreases. In connection with this, the larger the set value of the regeneration termination amount is, the larger the PM deposition amount in the filter 12 at the time of terminating the execution of the filter regeneration control is. Hence, the decrease in the exhaust gas pressure upstream of the filter 12 resulting from the execution of the filter regeneration control is smaller. In consequence, in this embodiment, the decrease in the exhaust gas pressure upstream of the filter 12 or the decrease in the pressure at the exhaust gas outlet of the turbine 8b can be made smaller when the atmospheric pressure around the vehicle is low than when the atmospheric pressure is high.

Reducing the decrease in the pressure at the exhaust gas outlet of the turbine 8b can reduce the increase in the turbine expansion ratio without a decrease in the exhaust gas pressure at the exhaust gas inlet of the turbine 8b (or with a smaller decrease in the exhaust gas pressure at the exhaust gas inlet of the turbine 8b). Thus, in this embodiment, even when the atmospheric pressure around the vehicle becomes low, the increase in the turbine expansion ratio can be prevented or can be made small without increasing the degree of opening of the nozzle vane 16 of the turbine 8b, which is the method conventionally employed, (or with a smaller increase in the degree of opening of the nozzle vane 16). Therefore, it is possible to prevent an excessive increase in the turbine expansion ratio with a decrease in the atmospheric pressure from occurring while preventing or reducing the decrease in the supercharging pressure.

### <Flow of Filter Regeneration Control>

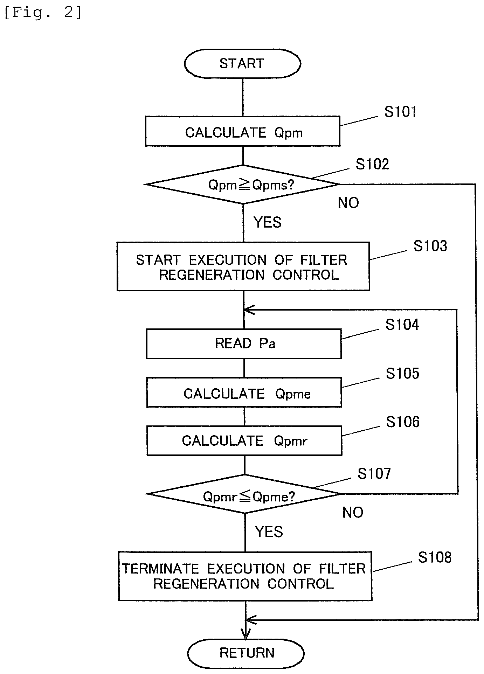

In the following, the flow of the filter regeneration control according to this embodiment will be described with reference to Fig. 2. Fig. 2 is a flow chart of the process of filter regeneration control according to this embodiment. A program for carrying out the filter regeneration control according to his flow is stored in the ECU 20 in advance and executed repeatedly at regular intervals.

In this process, first in step S101, the PM deposition amount Qpm at the present time is calculated. In this embodiment, as described before, the PM deposition amount (the PM deposition amount at the time when the filter regeneration control is not performed) Qpm is calculated by adding the inflowing PM quantity to the PM deposition amount in the filter 12 at the time when the execution of the filter regeneration control was terminated last time.

Then, in step S102, it is determined whether or not the PM deposition amount Qpm calculated in step S101 is equal to or larger than a regeneration start amount Qpms. The regeneration start amount Qpms is a value of the PM deposition amount that will not lead to an increase in the exhaust gas pressure upstream of the filter 12 that affects the operation state of the internal combustion engine 1 to an excessive degree. The regeneration start amount Qpms as such is determined in advance based on, for example, an experiment.

If the determination made in step S102 is negative, the execution of this process is once terminated. On the other hand, if the determination made in step S102 is affirmative, the processing of step S103 is executed next. In step S103, the execution of the filter regeneration control is started.

Then, in step S104, the atmospheric pressure Pa around the vehicle equipped with the internal combustion engine 1 (i.e. the output value of the atmospheric pressure sensor 25) is read. Then, in step S105, the regeneration termination amount Qpme is calculated based on the atmospheric pressure Pa read in step S104.

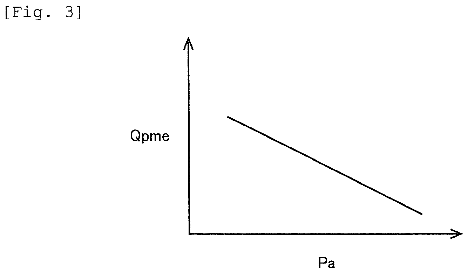

Fig. 3 shows the relationship between the atmospheric pressure Pa and the generation termination amount Qpme. As shown in Fig. 3, the lower the atmospheric pressure Pa is, the larger the regeneration termination amount Qpme is. This relationship between the atmospheric pressure Pa and the regeneration termination amount Qpme is determined in advance based on, for example, an experiment. The relationship between them is stored in the ECU 20 as a map or a function expression. In step S105, the regeneration termination amount Qpme is calculated using this map or function expression.

Then, in step S106, the PM deposition amount Qpmr in the filter 12 at the present time is calculated. In this embodiment, as described before, the PM deposition amount Qpmr in the filter 12 during the execution of the filter regeneration control is calculated by repeatedly subtracting the quantity of PM oxidized in the filter 12 per unit time from the PM deposition amount in the filter 12 at the time of the start of the execution of the filter regeneration control.

Then, in step S107, it is determined whether or not the PM deposition amount Qpmr calculated in step S106 is equal to or smaller than the regeneration termination amount Qpme. If the determination made in step S107 is negative, the processing of steps S104 through S107 is executed again. On the other hand, if the determination made in step S107 is affirmative, the processing of step S108 is executed next. In step S108, the execution of the filter regeneration control is terminated.

In the above-described process, the lower the atmospheric pressure Pa around the vehicle is, the larger the regeneration termination amount Qpme is set to be. This means that the lower the atmospheric pressure is, the smaller the amount of PM removed from the filter 12 by executing the filter regeneration control is made. Consequently, the lower the atmospheric pressure is, the larger the PM deposition amount in the filter 12 at the time of the termination of the filter regeneration control will be. In consequence, the lower the atmospheric pressure is, the smaller the decrease in the exhaust gas pressure upstream of the filter 12 or the pressure at the exhaust gas outlet of the turbine 8b resulting from the execution of the filter regeneration control will be. Thus, excessive increase in the turbine expansion ratio with a decrease in the atmospheric pressure can be prevented more reliably.

In the above-described process, the regeneration termination amount Qpme is varied continuously in relation to the change in the atmospheric pressure Pa, as shown in Fig. 3. However, the regeneration termination amount Qpme may be varied stepwise in relation to the change in the atmospheric pressure Pa. Alternatively, a regeneration termination amount for low altitudes (i.e. for high atmospheric pressures) and a regeneration termination amount for high altitudes (i.e. for low atmospheric pressures) may be determined in advance, and when the atmospheric pressure is higher than a predetermined pressure, the regeneration termination amount may be set to the value for low altitudes, while when the atmospheric pressure is equal to or lower than the predetermined pressure, the regeneration termination amount may be set to the value for high altitudes. In this case, the regeneration termination amount for low altitudes is larger than the regeneration termination amount for high altitudes.

### <Time Chart>

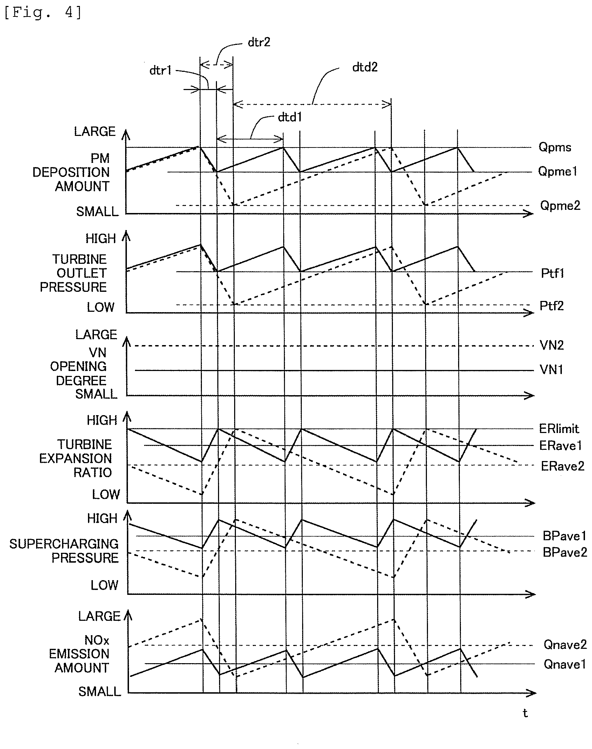

Fig. 4 is a time chart showing the changes with time of the PM deposition amount in the filter 12 (PM deposition amount), the pressure at the exhaust gas outlet of the turbine 8b (turbine outlet pressure), the degree of opening of the nozzle vane 16 (VN opening degree), the turbine expansion ratio, the supercharging pressure, and the amount of NOx emissions from the internal combustion engine 1 (NOx emission amount), in a case where the vehicle equipped with the internal combustion engine 1 is travelling at high altitude, namely in a case where the atmospheric pressure around the vehicle is low. In Fig. 4, the solid lines represent the changes of the respective values in a case where the filter regeneration control according to this embodiment is applied. The broken lines in Fig. 4 represent the changes of the respective values in a case where conventional control in which the regeneration termination amount in the filter regeneration control is constant independently on the atmospheric pressure. In Fig. 4, the periods in which the filter regeneration control is executed in the respective cases are indicated as dtr1 and dtr2, and the periods in which the filter regeneration control is not executed in the respective cases are indicated as dtd1 and dtd2.

As shown in Fig. 4, when the atmospheric pressure around the vehicle is low, the regeneration termination amount Qpme1 in the case of this embodiment is larger than the regeneration termination amount Qpme2 in the case of the conventional control. In consequence, the duration of the period in which the filter regeneration control is executed is shorter than that in the case of the conventional control (dtr1 < dtr2). In the filter regeneration control according to this embodiment, if the operation state of the internal combustion engine 1 is the same, the time taken from the termination of the execution of the filter regeneration control until the PM deposition amount reaches the regeneration start amount Qpms is shorter than that in the case of the convention control, as a matter of course. Consequently, the length of the period during which the filter regeneration control is not executed is also shorter in the case of the filter regeneration control in this embodiment than that in the case of the convention control (dtd1 < dtd2).

In this embodiment, the PM deposition amount in the filter 12 at the time of the termination of the execution of the filter regeneration control is larger than that in the case of the conventional control, and consequently the pressure at the turbine outlet is higher than that in the conventional case (Ptf1 > Ptf2). On the other hand, in this embodiment, the VN opening degree is smaller than that in the case of the conventional control (VN1 < VN2) so that the supercharging efficiency of the turbocharger 8 is kept higher than that in the conventional case.

In this embodiment, since the VN opening degree is smaller than that in the conventional case, the turbine expansion ratio is higher than that in the conventional case at the time of the start the execution of the filter regeneration control at which the pressure at the turbine outlet is the same between this embodiment and the conventional control. Therefore, the average of the turbine expansion ratio is larger than that in the conventional case (ERave1 > ERave2). However, at the time of the termination of the execution of the filter regeneration control, at which the turbine expansion ratio is highest, it is possible to keep the turbine expansion ratio lower than an upper limit value ERlimit, because the pressure at the turbine outlet is higher than in the case of the conventional control. Moreover, in this embodiment, since the turbine expansion ratio at the time of the start of the execution of the filter regeneration control is higher than that in the conventional case, the supercharging pressure at the time of the start of the execution of the filter regeneration control is higher than that in the conventional case. Therefore, it is possible to make the average supercharging pressure higher than that in the conventional case (BPave1 > BPave2). Thus, the process of this embodiment can prevent excessive increase in the turbine expansion ratio from occurring while preventing or reducing the decrease in the supercharging pressure.

Therefore, in this embodiment, it is possible to increase the quantity of supply of EGR gas while preventing or reducing the decrease in the intake air quantity of the internal combustion engine 1. Consequently, it is possible to make the average amount of NOx emissions smaller than that with the conventional process (Qnave1 < Qnave2) while reducing the increase in the amount of PM emissions from the internal combustion engine 1.

Furthermore, since the process of this embodiment can make the average supercharging pressure higher than that in the conventional case, it can improve the responsiveness in increasing the engine load during accelerating operation when the atmospheric pressure is low.

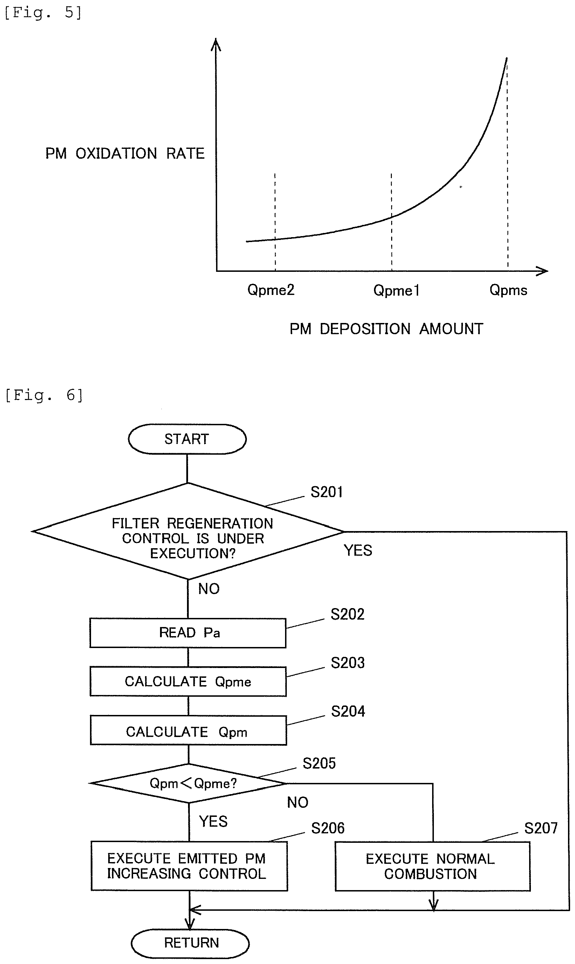

In this embodiment, when the atmospheric pressure around the vehicle is low, the frequency of execution of the filter regeneration control is higher than that in the conventional control, as will be seen from Fig. 4. In the following, relationship between the PM deposition amount in the filter 12 and the rate of oxidation of PM (the PM oxidation rate) during the execution of the filter regeneration control will be discussed with reference to Fig. 5.

As shown in Fig. 5, the larger the PM deposition amount in the filter 12 is, the higher the PM oxidation rate during the execution of the filter regeneration control is. Therefore, the PM oxidation rate during the period in which the PM deposition amount in the filter 12 is decreased from the regeneration start amount Qpms to the regeneration termination amount Qpme1 set in the control of this embodiment is higher than the PM oxidation rate during the period in which the PM deposition amount in the filter 12 is decreased from the regeneration termination amount Qpme1 set in the control of this embodiment to the regeneration termination amount Qpme2 set in the conventional control. In other words, the same amount of PM can be removed from the filter 12 in a shorter time when decreasing the PM deposition amount in the filter 12 from the regeneration start amount Qpms to the regeneration termination amount Qpme1 set in the control of this embodiment than when decreasing the PM deposition amount in the filter 12 from the regeneration termination amount Qpme1 set in the control of this embodiment to the regeneration termination amount Qpme2 set in the conventional control. Therefore, the process of this embodiment can prevent deterioration of fuel economy with the execution of the filter regeneration control, even though the frequency of execution of the filter regeneration control is higher than in the case of the conventional control.

The execution of the filter regeneration control according to this embodiment may be terminated at the time when a predetermined time has just elapsed after the start of the execution of the filter regeneration control. In this case, the duration of the execution of the filter regeneration control is set shorter when the atmospheric pressure around the vehicle is low than when the atmospheric pressure is high. With this control, as with the above-described control, the PM deposition amount at the time of the termination of the execution of the filter regeneration control in the filter 12 can be made larger when the atmospheric pressure is low than when the atmospheric pressure is high. Therefore, this control can provide the same advantageous effects as the above-described control.

### <Second Embodiment>

The general configuration of the internal combustion engine according to this embodiment and its air-intake and exhaust systems are the same as that in the first embodiment. In this embodiment also, filter regeneration control similar to that in the first embodiment is performed. In the following, the difference between the second embodiment and the first embodiment in controlling the combustion of the internal combustion engine will be described.

In this second embodiment, the regeneration termination amount depending on the atmospheric pressure around the vehicle is calculated even when the filter regeneration control is not executed. When the vehicle equipped with the internal combustion engine 1 is climbing, the atmospheric pressure around the vehicle decreases gradually. Hence, the regeneration termination amount determined in relation to the atmospheric pressure around the vehicle gradually increases.

On the other hand, when the filter regeneration control is not executed, although the PM deposition amount in the filter 12 gradually increases, the regeneration termination amount determined in relation to the atmospheric pressure may exceed the current PM deposition amount in the filter 12, in some cases where the decrease in the atmospheric pressure resulting from the climbing of the vehicle is large. In this embodiment, when the PM deposition amount in the filter 12 becomes smaller than the regeneration termination amount in this way, emitted PM increasing control is performed to increase the quantity of PM emitted from the internal combustion engine 1.

As the emitted PM increasing control is performed, the PM deposition amount in the filter 12 increases quickly. Consequently, the exhaust gas pressure upstream of the filter 12 or the pressure at the exhaust gas outlet of the turbine 8b can be increased more quickly. Therefore, the period of time during which the turbine expansion ratio tends to become high due to low pressure at the exhaust gas outlet of the turbine 8b can be shortened.

The emitted PM increasing control may be implemented by, for example, (1) control for advancing the timing of fuel injection through the fuel injection valve 3, (2) control for increasing the quantity of EGR gas, or (3) control for decreasing the fuel injection pressure of the fuel injection valve 3. If the fuel injection timing is advanced by control (1), the time at which the combustion temperature reaches its peak in a combustion cycle shifts closer to the compression top dead center (namely, the time at which the combustion temperature reaches its peak is advanced), and the peak value becomes higher. Consequently, the period of time during which fuel and air are mixed in the combustion chamber becomes shorter, leading to an increase in the amount of PM emissions. If the quantity of EGR gas is increased by control (2), the air-fuel ratio of the air-fuel mixture becomes lower. Consequently, air available for combustion becomes insufficient, leading to an increase in the amount of PM emissions. If the fuel injection pressure is decreased by control (3), the injected fuel is hard to be atomized. Consequently, the utilization of air in the combustion chamber decreases, leading to an increase in the amount of PM emissions.

As the emitted PM increasing control, any one of the above-described controls (1) to (3) may be employed, or two or more of them may be employed in combination. For example, performing control (1) makes the combustion noise worse. Then, additionally performing control (3), which can reduce the combustion start speed, can reduce the combustion noise.

### <Flow of Combustion Control>

In the following, the flow of combustion control according to this embodiment will be described with reference to Fig. 6. Fig. 6 is a flow chart of the process of combustion control according to this embodiment. A program for carrying out the filter regeneration control according to his flow is stored in the ECU 20 in advance and executed repeatedly at regular intervals.

In this flow, first in step S201, it is determined whether or not the filter regeneration control is under execution. If the determination made in step S201 is affirmative, the execution of this process is once terminated. On the other hand, if the determination made in step S201 is negative, the processing of step S202 is executed next.

In step S202, the atmospheric pressure around the vehicle equipped with the internal combustion engine 1 (i.e. the output value of the atmospheric pressure sensor 25) is read. Then, in step S203, the regeneration termination amount Qpme is calculated based on the atmospheric pressure Pa read in step S202. In this step, the regeneration termination amount Qpme is calculated in the same manner as step S105 in the flow shown in Fig. 2. Then, in step S204, the PM deposition amount Qpm in the filter 12 at the present time is calculated. In this step, the PM deposition amount Qpm is calculated in the same manner as step S101 in the flow shown in Fig. 2.

Then, in step S205, it is determined whether or not the PM deposition amount Qpm calculated in step S204 is smaller than the regeneration termination amount Qpme calculated in step S203. If the determination made in step S205 is affirmative, the processing of step S206 is executed next. In step S206, the emitted PM increasing control is executed. On the other hand, if the determination made in step S205 is negative, the processing of step S207 is executed next. In step S207, normal combustion control (that is, combustion control not performing the emitted PM increasing control) is performed.

In the above-described flow, when the PM deposition amount in the filter 12 is smaller than the regeneration termination amount determined in relation to the atmospheric pressure around the vehicle, the emitted PM increasing control is performed.

### <Time Chart>

Fig. 7 is a time chart showing the changes with time of the altitude and the atmospheric pressure around the vehicle, the status of combustion control (in terms of fuel injection timing ti and fuel injection pressure Pi), the quantity of PM emitted from the internal combustion engine 1 (emitted PM quantity), the amount of PM deposited in the filter 12 (PM deposition amount), the pressure at the exhaust gas outlet of the turbine 8b (turbine outlet pressure), the turbine expansion ratio, the degree of opening of the nozzle vane 16 (VN opening degree), the supercharging pressure, and the amount of NOx emissions from the internal combustion engine 1 (NOx emission amount), in a case where the vehicle equipped with the internal combustion engine 1 is climbing.

In the charts of the PM deposition amount, the turbine outlet pressure, the VN opening degree, the supercharging pressure, and the NOx emission amount in Fig. 7, the solid lines represent the changes of the respective values in a case where the emitted PM increasing control is performed according to this embodiment, and the broken lines represent the changes of the respective values in a case where the emitted PM increasing control is not performed.

As shown in Fig. 7, as the altitude of the place where the vehicle is travelling becomes higher, the atmospheric pressure around the vehicle decreases. In the case shown in Fig. 7, at the time when the atmospheric pressure around the vehicle reaches a certain pressure Paα, the PM deposition amount becomes smaller than the regeneration termination amount Qpmeα for this atmospheric pressure Paα. At this point of time, the execution of the emitted PM increasing control is started. In this illustrative case, the emitted PM increasing control is implemented as control for advancing the fuel injection timing ti and control for decreasing the fuel injection pressure Pi.

As the emitted PM increasing control is performed, the quantity of PM emitted from the internal combustion engine 1 increases. Consequently, the rate of increase in the PM deposition amount is larger than when the normal combustion control (combustion control not performing the emitted PM increasing control) is performed. Accordingly, the rate of increase in the turbine outlet pressure is also larger than when the normal combustion control is performed.

In Fig. 7, the altitude of the place where the vehicle is travelling increases further, and at the time when the atmospheric pressure around the vehicle reaches a certain pressure Paβ, the PM deposition amount which increases by the execution of the filter regeneration control becomes larger than the regeneration termination amount Qpmeβ for this atmospheric pressure Paβ. Consequently, the execution of the emitted PM increasing control is terminated at this time. The control of this embodiment can shorten the period during which the PM deposition amount is smaller than the regeneration termination amount adapted to the atmospheric pressure, by performing the emitted PM increasing control.

When the emitted PM increasing control is being performed, the turbine outlet pressure becomes higher than when the emitted PM increasing control is not performed. Therefore, even if the pressure at the exhaust gas inlet of the turbine is increased, excessive increase in the turbine expansion ratio can be prevented. Therefore, in this embodiment, during the execution of the emitted PM increasing control, the VN opening degree is decreased gradually to an extent that does not make the turbine expansion ratio higher than an upper limit.

Thus, it is possible to make the supercharging pressure higher than that in the case where the VN opening degree is increased responsive to a decrease in the atmospheric pressure in order to prevent excessive increase in the turbine expansion ratio (i.e. the case represented by the broken line in Fig. 7). Therefore, it is possible to increase the quantity of supply of EGR gas while reducing the decrease in the intake air quantity of the internal combustion engine 1. In consequence, it is possible to reduce the amount of NOx emissions while reducing the increase in the amount of PM emissions from the internal combustion engine 1 during the execution of the emitted PM increasing control.

### [Reference Signs List]

- 1:: internal combustion engine
- 2:: cylinder
- 3:: fuel injection valve
- 8:: turbocharger
- 8a:: compressor
- 8b:: turbine
- 11:: oxidation catalyst
- 12:: particulate filter
- 20:: ECU
- 21:: crank position sensor
- 22:: accelerator position sensor
- 23:: intake air pressure sensor
- 24:: temperature sensor
- 25:: atmospheric pressure sensor

## Claims

1. A control system for an internal combustion engine (1) equipped with a supercharger (8) that has a turbine (8b) provided in an exhaust passage (6, 7) and a compressor (8a) provided in an intake passage (4, 5) to supercharge intake air utilizing the energy of exhaust gas, comprising:
a filter (12) provided in the exhaust passage downstream of said turbine (8b) to trap particulate matter (PM) in exhaust gas; and
a regeneration execution unit (20) that is configured to execute filter regeneration control for removing particulate matter deposited in said filter (12) by oxidizing it,
wherein
the amount of particulate matter deposited in said filter (12) at which said regeneration execution unit (20) terminates the execution of the filter regeneration control after starting the execution of the filter regeneration control is larger when the atmospheric pressure (Pa) around a vehicle equipped with the internal combustion engine (1) is low than when it is high; and
the lower the atmospheric pressure (Pa) around the vehicle is, the smaller the amount of particulate matter removed from said filter (12) by executing the filter regeneration control is made;
the control system being **characterized in that**,
after starting the execution of the filter regeneration control, said regeneration execution unit (20) is configured to terminate the execution of the filter regeneration control when the amount of particulate matter deposited in said filter (Qpmr) becomes equal to or smaller than a regeneration termination amount (Qpme) determined based on the atmospheric pressure (Pa) around the vehicle, and when the amount of particulate matter deposited in said filter (Qpmr) is smaller than said regeneration termination amount (Qpme) while the filter regeneration control is not being performed by said regeneration execution unit, the control system performs emitted particulate matter increasing control for increasing the quantity of particulate matter emitted from the internal combustion engine (S206).

## Patentansprüche

1. Steuerungssystem für einen Verbrennungsmotor (1), der mit einem Lader (8) ausgestattet ist, welcher eine Turbine (8b), die in einem Auslasskanal (6, 7) vorgesehen ist, und einen Verdichter (8a), der in einem Einlasskanal (4, 5) vorgesehen ist, aufweist, um Einlassluft durch Nutzung der Energie von Abgas aufzuladen, umfassend:
einen Filter (12), der in dem Auslasskanal stromab der Turbine (8b) vorgesehen ist, um Partikel (PM) in Abgas abzufangen, und
eine Regenerationsausführungseinheit (20), die dazu ausgebildet ist, Filterregenerationssteuerung zum Entfernen von in dem Filter (12) eingelagerten Partikeln durch Oxidieren derselben auszuführen,
wobei
die in dem Filter (12) eingelagerte Menge an Partikeln, bei der die Regenerationsausführungseinheit (20) nach dem Starten des Ausführens der Filterregenerationssteuerung das Ausführen der Filterregenerationssteuerung beendet, größer ist, wenn der Umgebungsdruck (Pa) um ein Fahrzeug, das mit dem Verbrennungsmotor (1) ausgestattet ist, niedrig ist, als wenn er hoch ist, und
die Menge an Partikeln, die durch Ausführen der Filterregenerationssteuerung aus dem Filter (12) entfernt wird, umso kleiner gemacht wird, je niedriger der Umgebungsdruck (Pa) um das Fahrzeug ist,
wobei das Steuerungssystem **dadurch gekennzeichnet ist, dass**
nach dem Starten des Ausführens der Filterregenerationssteuerung die Regenerationsausführungseinheit (20) dazu ausgebildet ist, das Ausführen der Filterregenerationssteuerung zu beenden, wenn die in dem Filter eingelagerte Menge an Partikeln (Qpmr) kleiner gleich einer Regenerationsbeendigungsmenge (Qpme) wird, die basierend auf dem Umgebungsdruck (Pa) um das Fahrzeug bestimmt wird, und, wenn die in dem Filter eingelagerte Menge an Partikeln (Qpmr) kleiner als die Regenerationsbeendigungsmenge (Qpme) ist, während die Filterregenerationssteuerung durch die Regenerationsausführungseinheit nicht durchgeführt wird, das Steuerungssystem Partikelemissionserhöhungssteuerung zum Erhöhen der Menge an Partikeln, die von dem Verbrennungsmotor (S206) emittiert wird, durchführt.

## Revendications

1. Système de commande pour un moteur à combustion interne (1) équipé d'un dispositif de suralimentation (8) qui a une turbine (8b) disposée dans un passage d'échappement (6, 7) et un compresseur (8a) disposé dans un passage d'alimentation (4, 5) pour suralimenter de l'air d'alimentation en utilisant de l'énergie de gaz d'échappement, comportant :
un filtre (12) prévu dans le passage d'échappement en aval de ladite turbine (8b) pour piéger de la matière en particules (PM) dans le gaz d'échappement ; et
une unité d'exécution de régénération (20) qui est configurée pour exécuter une commande de régénération de filtre pour retirer de la matière en particules déposée dans ledit filtre (12) en l'oxydant,
dans lequel
la quantité de matière en particules déposée dans ledit filtre (12) à laquelle ladite unité d'exécution de régénération (20) termine l'exécution de la commande de régénération de filtre après avoir commencé l'exécution de la commande de régénération de filtre est plus grande quand la pression atmosphérique (Pa) autour d'un véhicule équipé du moteur à combustion interne (1) est basse que quand elle est haute ; et
plus la pression atmosphérique (Pa) autour du véhicule est basse, plus la quantité de matière en particules retirée dudit filtre (12) en exécutant la commande de régénération de filtre est rendue faible;
le système de commande étant **caractérisé en ce que**,
après avoir commencé l'exécution de la commande de régénération de filtre, ladite unité d'exécution de régénération (20) est configurée pour terminer l'exécution de la commande de régénération de filtre quand la quantité de matière en particules déposée dans ledit filtre (Qpmr) devient égale ou inférieure à une quantité d'achèvement de régénération (Qpme) déterminée sur la base de la pression atmosphérique (Pa) autour du véhicule,
et quand la quantité de matière en particules déposée dans ledit filtre (Qpmr) est plus petite que ladite quantité d'achèvement de régénération (Qpme) alors que la commande de régénération de filtre n'est pas en cours de réalisation par ladite unité d'exécution de régénération, le système de commande réalise une commande d'augmentation de matière en particules émise pour augmenter la quantité de matière en particules émise par le moteur à combustion interne (S206).
